# FASCICULE DE BREVET EUROPEEN

(11) **EP 0 702 423 B1**
(45) Date de publication et mention de la délivrance du brevet: **13.02.2002**
(21) Numéro de dépôt: 95402023.6
(22) Date de dépôt: 07.09.1995
(51) Int. Cl.: H01Q 1/12, H01Q 15/00

(54) **Vitrage perméable aux rayonnements électromagnétiques**
Für elektromagnetische Strahlungen durchlässige Glasscheibe
Permeable electromagnetic radiations glass

(30) Priorité: 16.09.1994 DE 4433051
(43) Date de publication de la demande: 20.03.1996
(73) Titulaire: SAINT-GOBAIN GLASS FRANCE, 92400 Courbevoie (FR)
(72) Inventeur: Sauer, Gerd, D-52224 Stolberg (DE)
(74) Mandataire: Muller, René

(56) Documents cités:
- EP-A- 0 499 868
- WO-A-92/10046
- DE-A- 3 436 500
- DE-A- 4 010 242
- US-A- 4 368 945
- US-A- 4 916 296
- PATENT ABSTRACTS OF JAPAN vol. 17 no. 178 (E-1347) ,7 Avril 1993 & JP-A-04 332495 (NEC KANSAI) 19 Novembre 1992,

## Description

L'invention concerne un vitrage comportant au moins une feuille de verre et destiné à équiper un espace clos, dans lequel on a disposé un émetteur et/ou un récepteur adapté(s) à un rayonnement électromagnétique dans la gamme non visible du spectre et capable de traverser le verre.

La technologie actuelle permet d'utiliser la transmission de signaux et de données, au moyen d'un rayonnement électromagnétique de la gamme non visible du spectre, pour une grande variété d'applications, que ce soit pour les véhicules ou pour les immeubles. Ainsi, par exemple, on emploie couramment des émetteurs et récepteurs à infrarouges pour contrôler à distance les systèmes d'alarme ou de fermeture. Pour ce qui est des véhicules automobiles, cette technique permet la transmission d'informations relatives à la situation du trafic ou à la position d'un véhicule, le dialogue avec les systèmes de comptabilisation de taxes ou le calcul de la distance séparant un véhicule des autres, tandis que pour les bâtiments, elle permet l'enregistrement des personnes en approche. Pour de telles applications, il est possible d'employer des émetteurs et des récepteurs pour micro-ondes ou ultraviolets. La technologie des micro-ondes permet quant à elle de remplir bien d'autres fonctions, comme, par exemple, la transmission par radiotéléphonie au sein d'un réseau numérique, la radiodiffusion numérique, qu'elle se fasse ou non par satellite, ainsi que la localisation d'un véhicule au moyen d'un système de télédétection par satellite, tel que le GPS (Global Position System).

Le brevet EP 0 312 788 B1 fait mention d'un dispositif doté d'un émetteur et d'un récepteur de lumière, tous deux disposés à l'intérieur d'un véhicule, l'émetteur étant orienté de façon que la lumière qu'il produit traverse le pare-brise et soit diffusée hors du véhicule, tandis que le récepteur est disposé de manière à pouvoir détecter et interpréter la lumière émise depuis l'extérieur du véhicule et traversant le pare-brise. Notons que ce dispositif utilise de préférence le rayonnement infrarouge.

Pour les dispositifs connus du type déjà mentionné, on emploie des vitrages qui sont suffisamment transparents au rayonnement électromagnétique utilisé dans chaque cas. Cependant, il se peut, pour diverses raisons, que l'on ne souhaite pas que le rayonnement extérieur pénètre à l'intérieur de l'espace clos pourvu de ce vitrage. En effet, ce rayonnement pourrait par exemple se révéler gênant voire nocif pour les occupants de l'endroit. En outre, au travers de tels vitrages, pour les installations conformes déjà connues, les rayons peuvent venir frapper le récepteur, provenant de différentes directions, ce qui risque de causer une diminution peu souhaitable du rapport signal/bruit.

L'invention a donc pour objectif de réaliser un vitrage conforme et qui permette, d'une part, de réduire d'éventuelles perturbations que pourrait subir le récepteur installé à l'intérieur de l'espace clos, et d'autre part, de gêner voire d'empêcher l'intrusion de rayonnements indésirables dans ce même endroit et ce, sans porter préjudice ni à l'efficacité de l'émetteur et/ou du récepteur, ni à la transparence du vitrage.

Cet objectif peut être réalisé selon l'invention, par un vitrage comportant au moins une feuille de verre présentant, excepté pour une région de surface délimitée et prévue pour le passage d'un rayonnement électromagnétique, une forte capacité de réflexion et/ou d'absorption des rayons notamment de la gamme de longueurs d'ondes de l'émetteur et/ou du récepteur.

Le vitrage selon l'invention se distingue donc en ce qu'il présente des zones de surface dotées de propriétés de réflexion et de transmission différentes, de sorte qu'il ne possède une forte transmission que dans une région réduite, choisie avec précision, pour la partie du spectre du rayonnement qui permet la transmission des données, tandis que sur tout le reste de la surface, il ne laisse pas passer ces mêmes rayons, sinon très faiblement, mais au contraire les réfléchit et/ou les absorbe. De cette façon, le rayonnement utilisé pour la transmission des données subit un affaiblissement nul ou quasi-nul au niveau de la région nécessaire à l'émetteur et/ou au récepteur, alors que ce rayonnement ne peut traverser le reste de la surface du vitrage. De plus, le rayonnement ne cause aucune des perturbations mentionnées plus haut.

Le vitrage peut, de façon conforme à l'objectif fixé, être façonné, pour ce qui est de la zone située à l'extérieur de la région délimitée sur la surface, de manière à réfléchir et/ou à absorber non seulement le rayonnement électromagnétique utilisé notamment par l'émetteur et/ou le récepteur, mais aussi, du moins dans la mesure du possible, tous les autres rayonnements situés au-dessus et en dessous de la gamme visible du spectre. Un tel effet peut, par exemple, s'obtenir au moyen de revêtements superficiels appropriés, en particulier par une couche mince métallique transparente. De cette façon, il est possible de protéger avec une meilleure efficacité l'espace clos des rayonnements perturbants ou nocifs.

Une première variante de cette invention se distingue en ce que notamment l'activité de l'émetteur et/ou du récepteur porte sur le domaine infrarouge du spectre lumineux et en ce que le vitrage est pourvu sur toute sa surface, excepté dans la région destinée au passage du rayonnement infrarouge, d'une couche capable de réfléchir et/ou d'absorber ces mêmes rayons.

Cette variante présente l'avantage de permettre, d'une part, l'utilisation de systèmes d'émission et/ou de réception qui ont fait leurs preuves, tandis que le vitrage, d'autre part, empêche le réchauffement de l'espace clos, réchauffement provoqué par la partie infrarouge du rayonnement solaire. Cette première variante est relativement simple à réaliser, car les vitrages courants présentent en eux-mêmes une capacité de transmission des infrarouges relativement forte. Dans ce cas, il suffit donc de veiller à ce que la couche additionnelle, destinée à réfléchir et/ou absorber les rayons infrarouges, soit interrompue dans la région de surface conçue pour être traversée par le rayonnement.

La première variante peut également être réalisé de façon que le vitrage soit pourvu, y compris dans la région de surface délimitée et prévue pour le passage des rayons véhiculant les données, d'une couche réfléchissant les infrarouges mais que celle-ci laisse de nouveau passer les rayons dans cette même région délimitée, par l'intermédiaire d'une couche additionnelle anti-réfléchissante. Ce type de couche anti-réfléchissante est bien connu et se distingue en ce qu'il présente, pour la longueur d'onde en question, que nous appellerons lambda, une épaisseur équivalant à lambda/4 ou à un de ses multiples impairs.

Une seconde variante de l'invention se distingue en ce que notamment l'émetteur et/ou le récepteur couvre(nt) la gamme des micro-ondes et en ce que le vitrage, qui présente en lui-même une forte réflexion dans ce domaine du spectre, possède une épaisseur adaptée permettant la transmission des micro-ondes, dans la région de surface délimitée et prévue pour le passage dudit rayonnement.

Les ondes électromagnétiques appelées micro-ondes possèdent des longueurs d'onde inférieures à 10cm. Or, on sait que les vitrages couramment utilisés sont en fait opaques à de telles longueurs d'onde. C'est pourquoi les émetteurs et récepteurs fonctionnant avec ce type de rayons se trouvent généralement à l'extérieur de l'espace clos. L'invention permet à présent de placer émetteurs et récepteurs à l'intérieur du local, même pour le rayonnement micro-ondes, parce qu'elle permet de rendre transparente à ce type de lumière une région précise de la fenêtre et ce, par l'accroissement de l'épaisseur de la vitre. L'invention repose, dans une certaine mesure, sur l'idée que le pouvoir de transmission d'un vitrage culmine, dans un domaine précis de longueurs d'ondes que nous appellerons lambda, si l'épaisseur du vitrage est de l'ordre lambda/2 ou bien de l'un de ses multiples impairs. Par exemple, si l'on souhaite faire fonctionner un émetteur et/ou un récepteur sur une fréquence de 5,8 GHz, c'est à dire avec une longueur d'onde de 5,1 cm, le pouvoir de transmission du vitrage sera maximal à condition que l'épaisseur de ce dernier soit de 9,8mm, dans la région superficielle délimitée et prévue pour le passage des rayons.

Pour ce qui est de la réalisation pratique de l'invention, avec un rayonnement compris dans la gamme des micro-ondes, on peut par exemple faire en sorte qu'une feuille de verre, qui, avec une première feuille de verre, permet d'atteindre l'épaisseur souhaitée, soit collée sur cette première feuille de verre, au niveau de la région délimitée. Néanmoins, dans ce cas, il convient de veiller à ce que la couche adhésive, qui fixe la seconde feuille de verre à la première, tout comme les éventuelles autres couches intermédiaires ou adhésives comprises dans le vitrage, soient constituées de matériaux qui présentent le même indice de réfraction que le verre des deux feuilles de verre, pour la longueur des micro-ondes considérées, afin que ce vitrage soit homogène, d'un point de vue diélectrique, dans cette région délimitée à la surface et qu'il ne s'y produise aucun déphasage.

Mais il est également possible d'agir de sorte que la région délimitée du vitrage soit totalement découpée, par exemple en suivant un contour circulaire, et qu'une feuille de verre de l'épaisseur souhaitée soit installée dans le vide ainsi créé et collée à la paroi du trou. Cette variante ne provoque pas de déphasage à l'intérieur du corps du verre, si bien qu'il n'est pas nécessaire de prendre des mesures particulières en ce qui concerne les couches intermédiaires et adhésives.

Pour toutes les variantes de l'invention, les différentes propriétés de transmission et de réflexion des deux régions que l'on distingue sur la surface produisent aussi leur effet, en temps normal, sur la gamme visible du spectre, c'est à dire qu'elles peuvent être vues à l'oeil nu, même si ce n'est que dans une moindre mesure. Afin d'atténuer cet effet et de donner un aspect homogène du vitrage, autour et à l'intérieur de la région de surface capable d'une plus forte transmission pour le rayonnement notamment de l'émetteur et/ou du récepteur, et de réduire, qui plus est, la visibilité de l'émetteur et/ou du récepteur, il est approprié de doter une partie de la surface du vitrage d'une feuille ou d'une couche absorbant la lumière et dont le pouvoir de transmission pour la lumière visible est inférieur à 30%, la région délimitée se trouvant dans cette partie de surface. Pour un vitrage feuilleté, l'absorption peut être amenée à la valeur souhaitée, d'une manière appropriée et ce, au moyen de matériaux capables d'absorber la lumière, qui sont présents dans la couche thermoplastique.

Les revendications secondaires, ainsi que la description ci-dessous d'une variante particulièrement intéressante, représentée dans les figures, présentent d'autres caractéristiques, adaptations conformes et avantages particuliers de l'invention.

Les illustrations suivantes présentent :

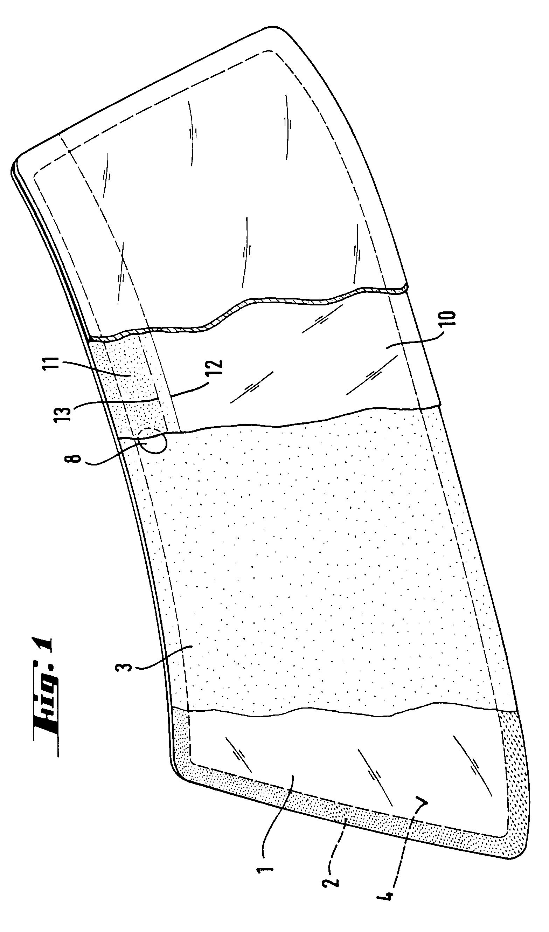

Fig 1: une vue partiellement éclatée d'un vitrage feuilleté adapté à la transmission du rayonnement infrarouge, et
Fig. 2: une vue en coupe du pare-brise représenté par la figure 1, doté d'un émetteur et d'un récepteur intégrés.

Le vitrage feuilleté représenté est employé comme pare-brise d'automobile. A l'intérieur de cette dernière ont été placés un émetteur et un récepteur conçus pour les rayonnements infrarouges, pour une longueur d'onde de 860 nm, par exemple. Le vitrage présente quatre couches différentes, à savoir une feuille de verre intérieure 1, une couche 3 réfléchissant les infrarouges, une couche thermoplastique intermédiaire 10 et une feuille de verre extérieure 32.

Sur le côté le plus intérieur, c'est à dire tourné vers les occupants du véhicule, se trouve la feuille de verre 1. Epaisse d'environ 2 mm, cette dernière est pourvue, dans la région de ses bords, sur le côté tourné vers l'intérieur de l'automobile, d'un revêtement 2, opaque, de la forme d'un cadre et constitué d'un émail cuit sur le verre. La feuille 1 peut quant à elle être faite d'un verre flotté couramment utilisé.

Sur celles des surfaces de la feuille de verre 1 qui est orientée vers l'extérieur et voisine de la couche thermoplastique intermédiaire 10, on a déposé une couche multiple 3 et ce, au moyen du procédé de pulvérisation cathodique. La couche multiple 3 peut par exemple être constituée d'une couche anti-reflet en oxyde de zinc, épaisse de 35 nm et placée sur la surface du verre, d'une couche d'argent de 15 nm et d'une autre couche anti-reflet de 35 nm, chacune d'elles étant accollée à la précédente.

Cette couche multiple 3 couvre toute la surface de la feuille de verre 1, à l'exception de la région délimitée 8. Une feuille de verre flotté dotée d'une telle couche multiple ne présente, pour une longueur d'onde de 860 nm, par exemple, qu'une transmission d'environ 30 %, ce qui signifie que 70 % des rayonnements infrarouges de cette longueur sont réfléchis ou absorbés par la couche multiple.

Pour empêcher le revêtement de couvrir la région de surface 8 lors du processus d'enduction, il est possible de couvrir cette zone d'une feuille adhésive qui sera retirée après l'opération. On peut aussi, au lieu de cela, déposer d'abord le revêtement sur toute la surface, pour ensuite l'éliminer de la zone concemée, par exemple au moyen de l'attaque au plasma, utilisée localement. Comme la capacité de transmission d'un verre flotté sans revêtement se monte à environ à 80% pour la longueur d'onde déjà citée de 860 nm, le rayonnement utilisé pour le transfert des données n'est affaibli que de façon limitée.

La couche thermoplastique intermédiaire 10, qui est jointe à la couche multiple 3, se constitue d'une feuille de polyvinylbutyral courante, épaisse de 0,76 mm. Cette couche 10 contient dans sa partie supérieure un filtre dit de bande 11. Ce filtre de bande ne se distingue des autres régions de la feuille thermoplastique intermédiaire que dans la mesure où des substances colorantes organiques ont été ajoutées à cette région de la feuille. On a pu constater, chose surprenante, que les filtres de bande déjà connus pour cette feuille présentaient en eux mêmes et ce, dans la gamme visible du spectre lumineux, une transmission inférieure à 30% alors que celle-ci dépasse 90% dans le domaine des infrarouges en question. Le filtre de bande 11 s'étend tout le long du bord supérieur de la vitre. Il couvre la zone 8 tout comme les régions voisines de la surface de vitre qui ont reçu un revêtement

On peut avoir prévu entre le bord 12 du filtre de bande et la ligne 13 une zone de transition dans laquelle la coloration du filtre augmente peu à peu. La région délimitée 8 se trouvera alors dans le secteur du filtre dotée de la coloration maximale.

En raison de son fort pouvoir d'absorption dans le domaine de la lumière visible, le filtre de bande 11 a pour effet de rendre largement invisible à l'oeil nu la région délimitée 8 ainsi que l'émetteur et/ou le récepteur placé(s) derrière elle. Une simple fraction de la lumière qui traverse le filtre de bande permet d'éclairer la région 8 et le ou les dispositifs qu'elle couvre. De même, une partie seulement de cette fraction est réfléchie, partie qui est de nouveau affaiblie par son passage au travers du filtre. Par conséquent, même si le pouvoir de réflexion des régions délimitées en ce qui concerne le domaine du visible est grandement supérieur ou inférieur à celui des régions extérieures, un observateur ne constatera qu'une différence très minime au niveau du pouvoir de réflexion, pour une transmissivité du filtre de 30%, c'est à dire que cette région est en elle-même à peine remarquée.

Bien entendu, la transmission du filtre de bande pour la lumière visible peut également présenter des valeurs supérieures à 30%, mais elle ne doit pas dépasser 40%. En revanche, réduire la transmission du filtre 11 à des valeurs allant jusqu'à 10% ne limite que très peu l'efficacité des émetteurs et récepteurs à infrarouges. Lorsque l'on emploie un filtre de bande contenant des substances colorantes organiques dont les zones d'absorption se trouvent dans le domaine de la lumière visible, la transmission d'infrarouges peut dépasser 75% pour un vitrage feuilleté ainsi équipé, malgré la forte absorption dans cette même gamme.

Avec un tel chiffre, même pour un rayonnement traversant deux fois le vitrage, dans le cas où émetteur et récepteur sont disposés à l'intérieur de l'espace clos, le filtre de bande 11 ne réduit l'intensité des rayons infrarouges qu'à environ la moitié de la valeur d'origine, ce qui est en temps normal parfaitement suffisant.

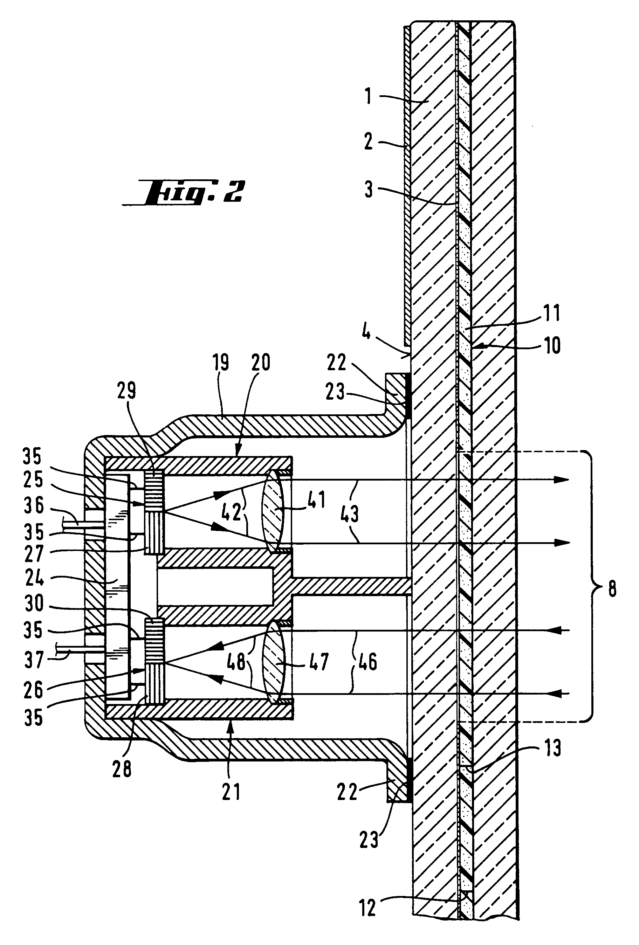

La figure 2 présente la structure d'un pare-brise conçu pour la transmission de données et directement pourvu d'un émetteur 20 et d'un récepteur 21. L'émetteur 20 et le récepteur 21, ainsi qu'un circuit électronique 24 sont ici regroupés en un élément fonctionnel optoélectronique et placés dans un boîtier 19. Ce boîtier 19 est au contact de la face 4 de la feuille de verre 1, face qui est tournée vers l'intérieur du véhicule, et ce, au moyen de ses côtés 22 et de ses couches adhésives 23. Le rayonnement électromagnétique envoyé par l'émetteur 20 traverse la région 8 du vitrage, tout comme le rayonnement provenant de l'extérieur et dirigé, lui, vers le récepteur 21.

La structure de l'émetteur et du récepteur peut bien sûr dépendre du choix de l'utilisateur. Par exemple, l'émetteur 20 et le récepteur 21 peuvent posséder chacun une photodiode, numérotées 25 et 26. Celles-ci pourraient présenter des régions 27 et 28 avec conducteurs de type N, ainsi que des régions 29 et 30 avec conducteurs de type P. Ces quatre régions 27 à 30 sont toutes reliées au circuit 24 au moyen des lignes électriques 35. Le circuit 24 peut pour sa part être connecté à un ordinateur (non-représenté ici) installé à bord du véhicule, au moyen des câbles 36 et 37. C'est dans l'émetteur 20, dans la région de transition entre la région 27 de type N et la région 29 de type P de la photodiode 25 qu'a réellement lieu l'émission de lumière. La zone émettrice ainsi créée se trouve située dans le point focal de la lentille 41, si bien que les rayons de lumière émis 42 forment derrière la lentille un faisceau de rayons parallèles 43.

Les rayons lumineux 46 émis depuis l'extérieur du véhicule sont, pour leur part, concentrés par la lentille 47 en un faisceau 48 qui converge au point focal de cette même lentille. Ce point focal se trouve situé à la surface de la photodiode 26.

L'installation de la figure 2 représente une combinaison entre un émetteur et un récepteur conçus pour des rayonnements électromagnétiques appartenant à la gamme des infrarouges et qui peuvent être concentrés au moyen de lentilles. Mais il est également possible d'utiliser le vitrage conforme à l'invention avec des émetteurs et/ou des récepteurs conçus pour d'autres longueurs d'onde, comme par exemple les ultraviolets ou les micro-ondes.

Il est en outre possible de disposer émetteur et récepteur comme on le souhaite, par exemple sur la surface du tableau de bord ou au dos du rétroviseur. Dans ce cas, le rayonnement peut atteindre de manière directe ou indirecte les zones du vitrage qui sont transparentes pour lui. Il est bien entendu également possible de prévoir, pour les émetteurs et/ou récepteurs disposés à une certaine distance du vitrage, des câbles de fibre optique permettant de transmettre le rayonnement émis et/ou reçu, ce qui peut être réalisé pour les infrarouges comme pour les ultraviolets.

## Revendications

1. Vitrage comportant au moins une feuille de verre destiné notamment à un espace clos, dans lequel on a prévu un émetteur et/ou un récepteur adapté(s) à un rayonnement électromagnétique dans la gamme non visible du spectre, ***caractérisé en ce qu***'il présente, excepté pour une région de surface (8) précisément délimitée et notamment prévue pour le passage des rayons, une forte réflexion et/ou absorption d'un rayonnement électromagnétique notamment dans la gamme de longueurs d'onde de l'émetteur (20) et/ou du récepteur (21).

2. Vitrage selon la revendication 1 notamment associé à l'utilisation d'un émetteur et/ou d'un récepteur opérant dans la gamme des infrarouges, ***caractérisé en ce que*** le vitrage est doté, excepté pour la région de surface (8) délimitée et prévue pour le passage d'un rayonnement infrarouge, d'une couche (3) réfléchissant et/ou absorbant ces mêmes rayons.

3. Vitrage selon la revendication 1 notamment associé à l'utilisation d'un émetteur et/ou d'un récepteur opérant dans la gamme des infrarouges, ***caractérisé en ce que*** le vitrage est pourvu sur toute sa surface d'une couche réfléchissant les rayons infrarouges, couche qui est en elle même rendue transparente à ces mêmes radiations dans la région prévue pour leur passage, et ce, au moyen notamment d'une couche additionnelle anti-réfléchissante pour ce type de longueur d'onde.

4. Vitrage selon la revendication 1 notamment associé à l'utilisation d'un émetteur et/ou d'un récepteur opérant dans la gamme des micro-ondes, ***caractérisé en ce que*** le vitrage, qui possède en lui-même une forte réflexion pour la gamme des micro-ondes, présente, dans la région superficielle délimitée et prévue pour le passage des rayonnements micro-ondes, une plus forte épaisseur, apte à permettre la transmission, cette épaisseur étant de l'ordre du quart ou d'un multiple impair du quart de la longueur d'onde utilisée notamment par l'émetteur et/ou le récepteur.

5. Vitrage selon l'une quelconque des revendications 1 à 4, ***caractérisé en ce qu***'il est pourvu, au moins dans la région superficielle (8) prévue pour laisser passer le rayonnement et au pourtour de cette région, d'une feuille ou d'une couche (11) absorbant la lumière visible et dont le pouvoir de transmission est inférieur à 40%, ou si possible à 30%, dans le domaine de la lumière visible.

6. Vitrage selon l'une quelconque des revendications 1 à 5, ***caractérisé en ce qu***'il est pourvu, dans la région précisément délimitée, d'une fibre optique qui est fixée notamment à un émetteur et/ou un récepteur, placé(s) à une courte distance du vitrage.

7. Espace clos formé d'au moins un vitrage selon l'une des revendications 1 à 6, et dans lequel est prévu un émetteur et/ou un récepteur adapté à un rayonnement électromagnétique dans la gamme non visible du spectre, ***caractérisé en ce que*** l'émetteur (20) et/ou le récepteur (21) est/sont placé(s) au niveau de la région (8) précisément délimitée sur la surface (4) du vitrage.

8. Espace clos selon la revendication 7, ***caractérisé en ce que*** le récepteur (21) est doté d'un circuit électronique intégré (24) qui lui permet d'interpréter les signaux qu'il reçoit.

## Patentansprüche

1. Fensterscheibe mit mindestens einer Glasscheibe für einen geschlossenen Raum, in dem ein Sender und/oder ein Empfänger für durch die Glasscheibe hindurchtretende elektromagnetische Strahlung im unsichtbaren Spektralbereich vorgesehen ist, **dadurch gekennzeichnet, dass** die Fensterscheibe mit Ausnahme eines für den Durchtritt der elektromagnetischen Strahlung bestimmten örtlich begrenzten Flächenbereichs (8) eine hohe Reflexion und/oder Absorption für die elektromagnetische Strahlung im Wellenlängenbereich des Senders (20) und/oder des Empfängers (21) aufweist.

2. Fensterscheibe nach Anspruch 1, insbesondere dem Gebrauch von im Spektralbereich der IR-Strahlung arbeitenden Sendern und/oder Empfängern zugeordnet, **dadurch gekennzeichnet, dass** die Fensterscheibe mit Ausnahme des für den Durchtritt der IR-Strahlung bestimmten Flächenbereichs (8) mit einer dieselbe Strahlung reflektierenden und/oder absorbierenden Schicht (3) versehen ist.

3. Fensterscheibe nach Anspruch 1, insbesondere dem Gebrauch von im Spektralbereich der IR-Strahlung arbeitenden Sendern und/oder Empfängern zugeordnet, **dadurch gekennzeichnet, dass** die Fensterscheibe insgesamt mit einer IR-Strahlen reflektierenden Schicht versehen ist, die als solche in dem für den Durchtritt der IR-Strahlung bestimmten Flächenbereich insbesondere durch eine zusätzliche Antireflexionsschicht für die IR-Strahlung transparent ist.

4. Fensterscheibe nach Anspruch 1, insbesondere dem Gebrauch von im Spektralbereich von Mikrowellen arbeitenden Sendern und/oder Empfängern zugeordnet, **dadurch gekennzeichnet, dass** die Fensterscheibe, die als solche im Mikrowellenbereich eine hohe Reflexion aufweist, in dem für den Durchtritt der Mikrowellenstrahlung bestimmten örtlich begrenzten Flächenbereich eine die Transmission ermöglichende erhöhte Dicke in Höhe von 1/4 oder einem ungeraden Mehrfachen von 1/4 der von dem Sender und/oder Empfänger verwendeten Wellenlänge aufweist.

5. Fensterscheibe nach einem der Ansprüche 1 bis 4, **dadurch gekennzeichnet, dass** sie wenigstens in einem für den Durchtritt der Strahlung bestimmten Flächenbereich (8) und dessen Umgebung mit einer das sichtbare Licht absorbierenden Folie oder Schicht (11) versehen ist, deren Transmission für das sichtbare Licht kleiner als 40 % ist, und vorzugsweise kleiner als 30 % ist.

6. Fensterscheibe nach einem der Ansprüche 1 bis 5, **dadurch gekennzeichnet, dass** die Fensterscheibe in dem örtlich begrenzten Flächenbereich mit einer Glasfaseroptik versehen ist, die mit einem in kurzem Abstand von der Fensterscheibe angeordneten Sender und/oder Empfänger verbunden ist.

7. Geschlossener Raum mit mindestens einer Fensterscheibe nach einem der Ansprüche 1 bis 6, in dem ein Sender und/oder Empfänger für elektromagnetische Strahlung im unsichtbaren Spektralbereich vorgesehen ist, **dadurch gekennzeichnet, dass** der Sender (20) und/oder der Empfänger (21) an der Position des örtlich begrenzten Flächenbereichs (8) auf der Oberfläche der Glasscheibe (4) angeordnet ist/sind.

8. Geschlossener Raum nach Anspruch 7, **dadurch gekennzeichnet, dass** der Empfänger mit einer integrierten elektronischen Schaltung (24) zur Auswertung der von ihm empfangenen Signale versehen ist.

## Claims

1. Glazing incorporating at least one glass sheet more particularly intended for an enclosed space, in which has been provided an emitter and/or a receiver adapted to an electromagnetic radiation in the non-visible range of the spectrum, **characterized in that**, except for a surface region (8) which is precisely defined and more particularly intended for the passage of rays, it has a high reflection and/or absorption for an electromagnetic radiation, more particularly in the wavelength range of the emitter (20) and/or receiver (21).

2. Glazing according to claim 1, particularly associated with the use of an emitter and/or receiver operating in the infrared range, **characterized in that**, except for the surface region (8) defined and provided for the passage of infrared radiation, the glazing is provided with a coating (3) reflecting and/or absorbing said same rays.

3. Glazing according to claim 1, particularly associated with the use of an emitter and/or receiver operating in the infrared range, **characterized in that** the glazing is provided over its entire surface with a coating reflecting infrared rays, said coating being itself rendered transparent to the same rays in the region provided for their passage, more particularly by means of an additional, anti-reflecting coating for this wavelength type.

4. Glazing according to claim 1, particularly associated with the use of an emitter and/or receiver operating in the microwave range, **characterized in that** the glazing, which has itself a high reflection for the microwave range, has in the surface region defined and provided for the passage of microwave rays, a greater thickness and is able to permit transmission, said thickness being approximately a quarter or uneven multiple of the quarter wavelength more particularly used by the emitter and/or receiver.

5. Glazing according to any one of the claims 1 to 4, **characterized in that**, at least in the surface region (8) for permitting the passage of radiation and/or at the periphery of said region, is provided a sheet or a coating (11) absorbing visible light and whose transmission power is below 40% or, if possible 30%, in the visible light range.

6. Glazing according to any one of the claims 1 to 5, **characterized in that**, in the precisely defined region, an optical fibre is provided and is more particularly fixed to an emitter and/or receiver placed at a short distance from the glazing.

7. Enclosed space formed by at least one glazing according to one of the claims 1 to 6 and in which is provided an emitter and/or receiver matched to an electromagnetic radiation in the non-visible range of the spectrum, **characterized in that** the emitter (20) and/or receiver (21) are placed level with the region (8) precisely defined on the glazing surface (4).

8. Enclosed space according to claim 7, **characterized in that** the receiver (21) has an integrated electronic circuit (24) enabling it to interpret the signals which is receives.
